# EUROPEAN PATENT APPLICATION

(11) **EP 3 477 036 A1**
(43) Date of publication of application: **01.05.2019**
(21) Application number: 17199297.7
(22) Date of filing: 31.10.2017
(51) Int. Cl.: E06B 3/663, G02F 1/153, G02F 1/163, G02F 1/1345

(54) **INTEGRATED GLAZING UNIT WITH ELECTRONIC DEVICE**

(71) Applicant: AGC Glass Europe, 1348 Louvain-La-Neuve (BE); Kinestral Technologies, Hayward, CA 94545 (US); Asahi Glass Co., Ltd., Chiyoda-ku Tokyo 100-8405 (JP); AGC Glass Company North America, Alpharetta GA 30022-1167 (US); AGC Vidros do Brasil Ltda, CEP 12523-671 Guaratinguetá São Paulo (BR)
(72) Inventor: VIVIER, Jonathan, 5030 Beuzet (BE); BOONAERT, Christophe, 7160 Godarville (BE); GALLIPEO, John, Hayward, CA 94545 (US)
(74) Representative: Chabou, Samia

(57) **Abstract**

The present invention concerns an integrated glazing unit (IGU), comprising:
(a) a first pane comprising a first pane edge;
(b) an electronic laminate comprising:
- a first substrate,
- a second substrate,
- an electronic device provided between the first and second substrate,
- a plurality of terminals coupled to the electronic device,
- a laminate edge recessed with respect to the first pane edge; and
wherein the first substrate is attached to the first pane;
(c) a flexible circuit board electrically coupled to at least a portion of the plurality of terminals and comprising an extended portion protruding out of the laminate edge and comprising a free end ;
(d) a second pane comprising a second pane edge and attached to a spacer of height H measured normal to the second pane, maintaining a distance between the second pane and the second substrate, said spacer being recessed with respect to the laminate edge and the second pane edge;
wherein the extended portion of the flexible circuit board is flush with or recessed from the second pane edge, and wherein the free end is located within a coupling volume. Said coupling volume has a rectangular cross-section normal to the second pane edge and a height H, and is defined by the second pane and the spacer.

## Description

### Field of the invention

The invention relates to an integrated glazing unit (IGU) comprising an electronic device provided between the first and the second panes of the IGU. In particular, it relates to the electric connection of the terminals of the electronic device within the IGU.

### Technical Background

In the building, automotive, aviation and other industries, laminated glass panels with integrated electronic components, such as electrochromic device, switchable films, light emitting device, photovoltaic cells, displays and/or a heating facility are known, e.g. for displaying information, lighting purposes, aesthetics reasons as well as for energy-savings. In particular, electrochromic devices, which change in optical transmissivity as a result of applied voltage and current, are in use today in electrochromic windows and in automotive mirrors.

To provide thermal insulation for the building, windows are often made as integrated glazing units (IGUs) and have a first glass sheet and a second glass sheet held apart by a spacer. A secondary seal typically surrounds the spacer. This works well for integrated glazing units of ordinary windows without electronic devices, with the spacer and the secondary seal hermetically sealing the two sheets of glass and preventing moisture condensation in the inner space between the two panes. When the ordinary sheet of glass are replaced by an electronic laminated assembly, the electric connections to the terminal(s) of electronic devices pose design challenges, in an integrated glazing unit that should maintain hermetic sealing.

Indeed, the manufacturing of an electronic laminated assembly with electronic components typically comprises the steps of depositing a conductive layer on a first substrate, realization of electronic circuits in the conductive layer and depositing of electronic components on the conductive layer, connected to the electronic circuits. The laminate is obtained by the application of the second substrate, which is then laminated. In each of these electronic laminated assembly, it is necessary to furnish an electric supply to the conducting layer for supplying electrical power to the electronic device. In some applications, it is also required to monitor the electronic device through a signal connection. These power and signal connections can be made in the following way. The cables or a junction connector can be connected to the conductive layer or directly to the electronic circuits. Then the assembly follows the same process of lamination as described above. The cable and/or junction connector exits the laminated assembly from the side edge.

These cable or junction connector and the connection to the electronic component or conductive layer are very fragile. They can get easily damaged during the manufacturing process which can lead to bad contacts or complete contact losses. Furthermore, contact problems can also appear due to bad application of the connector or usage of a bad type of connector. In the present invention, the electronic laminated assembly is further processed into an integrated glazing unit and therefore is further exposed to damage. In case of any damages to the cable or junction connector near or within the electronic laminated assembly, it is very difficult, if not impossible, to repair the integrated glazing unit or electronic laminated assembly without delamination, i.e. destruction of the integrated glazing unit or electronic laminated assembly.

Therefore, there is a technical challenge to design integrated glazing units comprising an electronic laminate assembly, wherein the electric connection is robust and reliable.

Furthermore, current commercial trend in building windows is to maximize luminosity and hence to maximize the surface allocated to the glass and to minimize the surface allocated to the frame. Frames are used indeed to integrate the glass panel within the building but as well to hide the electric connection and other functionalities of windows. Therefore, it is necessary to keep the size of the electric connection as small as possible to minimize the width of the frame.

Hence, in addition to the vulnerability of the electric connections, the size and location of such connections must be specifically addressed.

It has been surprisingly found that when the terminals of the electronic material of the electronic laminated assembly, are coupled to a flexible circuit board comprising an extended portion protruding out of the electronic laminated assembly edge but being flushed with or recess from the pane of the integrated glazing unit, said flexible circuit board comprising a free end located within a coupling volume (V) having a rectangular cross-section normal to the second pane edge, having a height (H) and being defined by the second pane and the spacer, it allows taking advantage of a larger space to make robust and protected electric connections between the electronic device and the cable harness. The integrated glazing unit of the invention is therefore robust and highly reliable and the method of production is therefore easier, highly reliable and efficient. It further allows minimizing the recess of the electronic laminated assembly within the integrated glazing unit and thereby the width of the frame necessary to hide the connectics.

### Summary of the invention

The present invention relates to an integrated glazing unit (IGU), comprising:
(a) a first pane comprising a first pane edge;
(b) an electronic laminate comprising:
   - a first substrate,
   - a second substrate,
   - an electronic device provided between the first and second substrate,
   - a plurality of terminals coupled to the electronic device,
   - a laminate edge recessed with respect to the first pane edge; and
   wherein the first substrate is attached to the first pane;
(c) a flexible circuit board electrically coupled to at least a portion of the plurality of terminals and comprising an extended portion protruding out of the laminate edge and comprising a free end ;
(d) a second pane comprising a second pane edge and attached to a spacer of height H measured normal to the second pane, maintaining a distance between the second pane and the second substrate, said spacer being recessed with respect to the laminate edge and the second pane edge;

Wherein the extended portion of the flexible circuit board is flush with or recessed from the second pane edge, and wherein the free end is located within a coupling volume. Said coupling volume has a rectangular cross-section normal to the second pane edge and a height H, and is defined by the second pane and the spacer.

The present invention further relates to method of producing said integrated glazing unit (IGU) comprising the steps of:
- laminating the electronic device to the first substrate and second substrate;
- attaching the electronic laminate to the first pane;
- attaching the second pane, to the spacer for maintaining a distance between the second pane and the second substrate;
- connecting the flexible circuit board to at least a portion of the terminals of the electronic laminate, with a extended portion protruding out of the laminate edge; and
- positioning the free end within the coupling volume such that the extended portion of the circuit board is flush with or recessed from the second pane edge.

Other aspects and advantages of the embodiments will become apparent from the following detailed description taken in conjunction with the accompanying drawings which illustrate, by way of example, the principles of the described embodiments.

### Brief description of the drawings

The described embodiments and the advantages thereof may best be understood by reference to the following description taken in conjunction with the accompanying drawings. These drawings in no way limit any changes in form and detail that may be made to the described embodiments by one skilled in the art without departing from the spirit and scope of the described embodiments.
FIG. 1 is a schematic cross-section view of an integrated glazing unit comprising an electronic laminate, a flexible circuit board, a spacer, and two glass sheets in accordance with some embodiments.
FIG. 2 is a schematic cross-section view of an integrated glazing unit comprising an electronic laminate, a flexible circuit board, a spacer, sealant, glass sheets and further comprising a second circuit board, a Zero Insertion Force (ZIF) connector and a cable harness in accordance with some embodiments.
FIG. 3 is a schematic cross-section view of an integrated glazing unit comprising an electronic laminate wherein one substrate of the electrochemical laminate is offset from another substrate of the laminate to expose a portion of the terminals in accordance with some embodiments.
FIG. 4 is a schematic cross-section view of an integrated glazing unit comprising an electronic laminate, a flexible circuit board, a spacer, two glass sheets and further comprising a third glass sheet.
FIG. 5 is a schematic cross-section view of an integrated glazing unit comprising two electronic laminates having each a flexible circuit board, a spacer, two glass sheets in accordance with some embodiments. Within each electronic laminate, one substrate of the electrochemical laminate is offset from another substrate of the laminate to expose a portion of the terminals. The shown embodiment further comprises a third glass sheet.

### Detailed description

For purposes of explanation, a lateral direction is considered parallel to a plane of, or tangent to, a main body of the integrated glazing unit, and a vertical direction is considered perpendicular to the main body of the integrated glazing unit, e.g., through a thickness of the integrated glazing unit and/or extending perpendicular to a major surface of the integrated glazing unit.

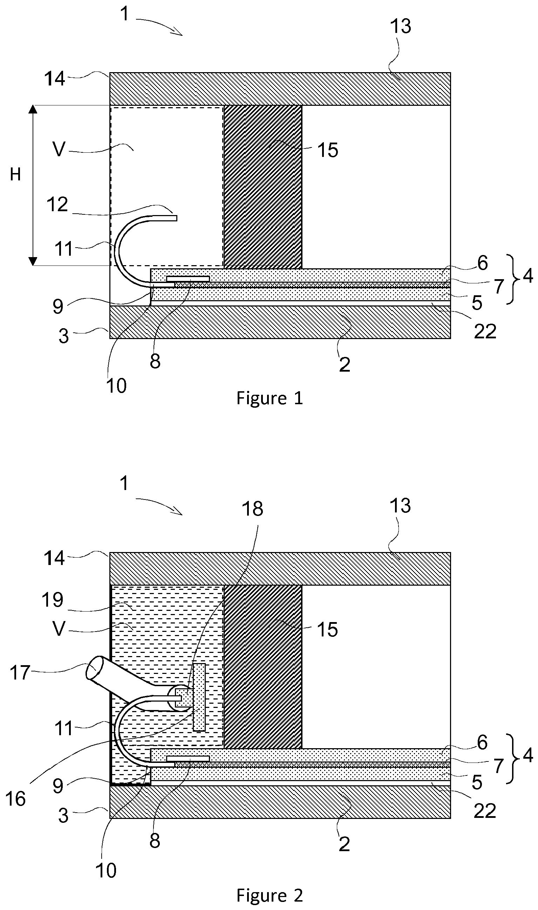

Like many ordinary integrated glazing units, the integrated glazing unit (1) of the present invention (also referred to herein as IGU) is thermally insulative. According to Figure 1, the IGU (1) of the present invention comprises a first pane (2) comprising a first pane edge (3), an electronic laminate (4), a flexible circuit board (10) and a second pane (13) comprising a second pane edge (14). The first panel and second panel are parallel to each other. Each pane could be glass or plastic or other transparent or translucent material.

The electronic laminate comprises a first substrate (5), a second substrate (6), an electronic device (7) provided between the first and second substrate, a plurality of terminals (8) coupled to the electronic device and a laminate edge (9) recessed with respect to the first pane edge of the IGU. The electronic laminate is attached to the first pane of the IGU along the first substrate (5). The second pane and attached to the spacer (15) of height H measured normal to the second pane, maintaining a distance between the second pane (13) and the second substrate (6) of the electronic laminate (4), said spacer (15) being recessed with respect to the laminate edge (9) and the second pane edge (14).

The IGU (1) of the invention can have its first pane (2) as an outer pane or an inner pane, and the second pane (13) could be an inner pane or an outer pane, relative to an interior space of a building in which the IGU is installed. Preferably, the electronic device is placed closer to the outer pane. In particular for electrochromic devices, the device is preferably placed closer to the outer pane than the inner pane to allow the adjustable tinting of the electrochromic device to shade the inner pane and the space between the inner and outer panes, which decreases heating of the argon, nitrogen, air or other gas between the panes.

In a preferred embodiment of the present invention, the electronic device is attached to the first pane (2), which serves as the carrier glass. Alternatively, the electronic device may be laminated to the second pane (13). The spacer (15) is attached to the second substrate (13) of the electronic laminate (4). In one embodiment, a seal material (19) surrounds the spacer (15) laterally and is referred to as the secondary sealant.

The first pane and the second pane of the IGU according to the invention can be made of glass, if so glass which can belong to various categories. The glass can thus be a glass of soda-lime-silica, aluminosilicate or borosilicate type, and the like. Preferably and for reasons of lower production costs, the glass sheet according to the invention is a sheet of soda-lime-silica glass. In a preferred embodiment of the present invention, the first pane (2) and/or second pane (13) are glass sheets preferably made of glass comprising strengthened soda lime glass having a thickness in the approximate range of about 3.0 mm to about 6.0 mm.

The glass sheet according to the invention can be a glass sheet obtained by a floating process, a drawing process, a rolling process or any other process known to manufacture a glass sheet starting from a molten glass composition. The glass sheet according to the invention can have a thickness varying between 0.1 and 25 mm. According to another embodiment of the present invention, an anti-reflective coating may be provided on the surface of glass sheet.

The thermoplastic interlayer to be used between the different laminated layers of the IGU of the present invention can be an material selected from the group consisting of ethylene vinyl acetate (EVA), polyisobutylene (PIB), polyvinyl butyral (PVB), polyurethane (PU), Cyclo Olefin Polymers (COP), an ultraviolet activated adhesive, and/or other transparent or translucent bonding material. Preferably the thermoplastic interlayer is a polyvinyl butyral layer.

As shown in **Figure 1****,** the gap or inner space between the second substrate (6) and the second pane (13) can be filled with argon, nitrogen, dry air or other gas, to provide thermal insulation as a general characteristic of integrated glazing units.

Although present embodiments are depicted as flat, further embodiments of the integrated glazing unit could use curved surfaces and materials, or angled surfaces, etc., and apply the mechanisms and arrangements described below.

According to **figure 1****,** the electronic laminate (4) comprises a first substrate (5), a second substrate (6), an electronic device (7) provided between the first and second substrate, and a plurality of terminals (8) coupled to the electronic device (7), wherein the edge of the laminate (9) is recessed with respect to the first pane edge (13) of the IGU. Such recess is advantageous to make the necessary electrical connections with the electronic device (7) of the electronic laminate (4) within the IGU but should be reduced as much as possible to minimize the size of the window frame that will be necessary to hide such electric connection, for aesthetic reasons.

The substrates (5, 6) of the electronic laminate may be a thin glass or flexible substrate, where the substrate has a thickness of 1.0mm or less and more particularly 0.5mm or less. The substrates may be glass, plastic, or other transparent or translucent material. In a preferred embodiment of the present invention, the first and second substrates comprise low CTE borosilicate glass having a thickness of 0.5mm.

Methods for manufacturing laminated assembly are well-known in the window industry since decades. A so-called sandwich of the first substrate, the electronic device and the second substrate is laminated in an automated laminating line by using the procedure of calendering and autoclaving. Calendering of the laminate means the pre-gluing of the sandwich under the action of a pressure imposed by rolls applied on either side of the substrates, optionally with action of heat. The final gluing of the substrates by a vacuum/heating cycle, which combines pressure and temperatures, takes place during the step of autoclaving, which completely removes air between the electronic device and the substrates.

In a preferred embodiment, the electronic laminate further comprise a first transparent conductive oxide layer, preferably a cathode layer, deposited on or otherwise attached to the first substrate (5); a first bus applied to the first substrate and the first transparent conductive layer; active electronic material layer; a second transparent conductive oxide layer, preferably an anode layer; deposited on or otherwise attached to the second substrate (6); and a second bus bar, applied to the second substrate and the second transparent conductive layer. The active electronic material layer can be an ion conductor for electrochromic device, suspended particles for Suspended Particle Devices,...

These layers could be fabricated or assembled in various ways, or variations could be devised. For example, the cathode layer could be deposited onto the first transparent conductive oxide layer, and the anode layer deposited onto the second transparent conductive oxide layer, with the ion conductor layer or electrolyte applied to either the cathode layer or the anode layer. Then, the two substrates (5, 6) could be brought together with the active electronic material layer in the middle, to form the electronic device. For example, the anode layer and the cathode layer may be applied by a wet process such as a sol-gel process or by the deposition of an ink containing electronic particles and the ion conductor layer may be a viscous polymer.

In one embodiment, a sealant is applied, as a ring around the edges of the electronic device (7), to seal the first substrate (5) and the second substrate (6) together and protect the electronic material from degradation due to exposure to moisture or atmosphere. Such sealant is referred to as the first sealant. Suitable sealants are polyvinylbutyral (PVB) or polyisobutylene (PIB).

The electronic device (7) is preferably selected from the group consisting of electrochromic device, switchable films, such as, LCDs (liquid crystal displays), or SPDs (suspended particle devices), photovoltaic cells, and/or display. More preferably, the electronic device is one more electrochromic devices. In a particular embodiment, the electronic device comprises 2 electrochromic devices.

In the preferred embodiment wherein the electronic device (7) is electrochromic device, such device comprises an ion conductor layer, a first electrode layer is on one side of and in contact with a first surface of ion conductor layer, and second electrode layer is on the other side of and in contact with a second surface of ion conductor layer. In addition, at least one of first and second, preferably both, electrode layers comprises electrochromic material. These layers are, in turn, arranged against the first and second substrates (5, 6). The first ion conductor layer is in electrical contact with one terminal of a power supply via a first bus bar and the second ion conductor layer is in electrical contact with the other terminal of a power supply via a second bus bar whereby the transmissivity of the electrochromic device may be changed by applying a voltage pulse.

It is necessary to furnish an electric supply to the electronic device within the electronic laminate of the present invention. In some applications, it is also required to monitor the electronic device, through signal connection. Therefore, the electronic laminate comprises a plurality of terminals (8) electrically coupled to the electronic device. Terminals can include bus bars, voltage sense pads and/or sequestration pads.

In general, bus bars are formed on the first and second substrates (5, 6), to control electronic device. For example, an anode bus bar could be formed along or proximate to one edge of the second substrate (6). A cathode bus bar could be formed along or proximate to an opposite edge of the first substrate (5). One technique for depositing bus bars onto glass is to deposit down molten solder (e.g., a solder line) onto glass. In general, the anode bus bar and cathode bus bar are at or near opposed edges of the electronic device, and on opposed faces. In further embodiments, multiple bus bars could be located in various ways, for example to accommodate different shaped substrates or to establish multiple zones of control of the electronic device.

In some embodiments, terminals can be voltage sense pads. Voltage sense pads allow a voltage of the electronic device to be measured at one or more sense terminals. A controller is generally used to charge and discharge the electronic device reliably, repeatedly and without exceeding a safe operating realm for the device. In order to do so, the controller can monitor a level of electric charge that is transferred to the electronic device, and also ensure that the potential of the electronic device does not exceed a predetermined safe operating limit. One or more sense voltage terminals located at certain spatial locations of the device would provide a measurement of the cell potential (i.e., voltage between the anode and cathode) of the device at a those spatial locations. If the sense voltage limit is reached the driver can react to prevent the device from being damaged. Sense voltage terminals and driver operation are described in Publication No. US2016/0202590, and is incorporated by reference.

In the embodiments wherein the electronic device is an electrochromic device, the electronic laminate can further comprise terminals that may function as charge sequestration pads. The sequestration pads allow charge of the electrochromic device to be sequestered in a sequestration region, controlled by two sequestration terminals which act as bus bars for the sequestration region, or one sequestration terminal and one bus bar, or any other variations. In most circumstances, the device maintains charge neutrality, and charge is merely moved from one electrode to the other as the device switches. However, certain degradation mechanisms, can increase or decrease the total transportable charge in the device (e.g., spurious oxidation). This excess charge can be periodically eliminated via a sequestration process, wherein one or more redox elements located at certain spatial locations of the device would enable excess charge to be moved from within the device into the redox element. Sequestration terminals are electrically connected to the redox elements to enable separate control of the voltage and current applied to the redox element. Sequestration terminals and redox elements are described in Publication No. US2016/0202588 and are herein incorporated by reference.

As shown in **Figure 1****,** at least a portion of the plurality of terminals (8) coupled to the electronic device (7) such as bus bars, sense voltage terminals, and/or sequestration terminals, are electrically coupled to the flexible circuit board (10). The flexible circuit board is also well known as flexible printed circuit (FPC).

The flexible circuit board (10) comprises an extended portion (11) protruding out of the laminate edge (9) and comprising a free end (12). The extended portion (11) of the flexible circuit board (10) is flush with or recessed from the second pane edge (14). The free end (12) is located within a coupling volume (V). The coupling volume (V) has a rectangular cross-section normal to the second pane edge (14) and height H and is defined by the second pane (13) and the spacer (15). It has been surprisingly found that locating the free end (12) in the coupling volume provides at least two unexpected benefits: it allows taking advantage of a larger space to make robust and protected electric connections while minimizing the recess of the electronic laminated assembly. Such minimal recess provides aesthetics benefits in maximizing the glass surface of the IGU and minimizing the frame surrounding the IGU that is required to hide the electrical connections.

If necessary, the free end (12) of the extended portion (11) of the flexible circuit board (10) can be maintained in the coupling volume V by any fixing means such as gluing, preferably with a sealant material, more preferably the same sealant material that will be used for the secondary seal, snap-fitting, and/or by being embedded in a sealant material.

Suitable direct connections between the terminals and the flexible circuit board are soldered connections, ultrasonic welds, or conductive adhesive. Suitable flexible materials for the flexible circuit board of the present invention are polyimide foil, polyimide-fluoropolymer composite foil, or other flexible polymeric materials. In some embodiments, the terminals can be connected to a conductive member, which is then connected to the circuit board. Some examples of conductive members are metallic ribbon, copper ribbon, flexible ribbon cables, and conductive wires. The conductive members can be connected to the terminals, and the flexible circuit boards via soldered connections, ultrasonic welds, or conductive adhesive.

In one embodiment, the flexible circuit board (10) is reflow soldered to these terminals prior to assembling the second substrate (6) and the first substrate (5) together. Notches in the flexible circuit board expose portions of wires which are available for connection to the respective terminals of the electronic device. The terminals can include or be made of solder. A reflow process (using applied heat) melts the solder, which then electrically and physically bonds the wire to the terminal, for each wire and terminal pair in some embodiments. In some embodiments, the connections to the terminals are made before the first substrate (5) and second substrate (6) are paired, and these connections are embedded within the laminate.

In a preferred embodiment, the electronic laminate and first and second panes are incorporated in the IGU with a spacer (15) and a secondary sealant (19). The sealant (19) contacts the electronic laminate (4) and the first pane (2) to the second glass pane (13) as well as embeds the flexible circuit board (10). The spacer and the secondary sealant serve to connect the electronic device and first pane (2) to the second pane (13), while maintaining a thermally insulating space in between. There is also an additional effect of protecting the electronic device and flex circuit board, from the environment. The secondary sealant could be silicone or any material with low water permeability.

Therefore, **Figure 1** illustrates an IGU of the present invention, comprising a glass sheet as the first pane (2) comprising a first pane edge (3), an electronic laminate (4) with a laminate edge (9), a flexible circuit board (10), a spacer (15) and a glass sheet as the second pane (13) comprising a second pane edge (14). The electronic laminate (4) comprises a glass sheet as the first substrate (5), a glass sheet as the second substrate (6), an electronic device (7) provided between the first and second substrate. Figure 1 shows a terminal (8) being a bus bar, a portion thereof being coupled to the electronic device. The laminate edge (9) is recessed with respect to the first pane edge (3). The first pane is laminated to the first substrate (5) of the electronic laminate with a polyvinyl butyral (PVB) layer (22). The flexible circuit board (10) is electrically coupled to at least a portion of the plurality of terminals (8) and comprises an extended portion (11) protruding out of the laminate edge (9) and free end (12). The second pane (13) is attached to a spacer (15) of height H measured normal to the second pane, maintaining a distance between the second pane (13) and the second substrate (6). Said spacer (15) is recessed with respect to the laminate edge (9) and the second pane edge (14). The extended portion (11) of the flexible circuit board (10) is flush with or recessed from the second pane edge (14). The free end (12) is located within the coupling volume (V). Such coupling volume has a rectangular cross-section normal to the second pane edge (13) and a height H and is defined by the second pane (13) and the spacer (15).

In a preferred embodiment of the present invention, the free end (12) of the extended portion (11) of the flexible circuit board (10) is connected to a cable harness (17) through a second circuit board (16) as illustrated in **Figure 2****.** The cable harness in turn, provides the electrical connection to the controller assembly, driver and/or the power supply. Preferably, the second circuit board is a rigid circuit board supporting a Zero Insertion Force connector (18). The rigid circuit board substrate can be made from a rigid material such as woven fiberglass cloth impregnated with an epoxy resin, cotton paper impregnated with resin, aluminum, alumina, matte glass and polyester, or other rigid polymeric materials. Some examples of materials used in rigid circuit boards are FR-2, FR-4, G-10, CEM-1, CEM-2, PTFE, aluminum, and alumina.

The embodiment of Figure 2 further shows an IGU embodiment wherein the free end of the extended portion of the flexible circuit is connected to a cable harness (17) through a second circuit board (16), preferably a rigid circuit board supporting a Zero Insertion Force connector (18). The volume defined by the first pane, the second pane, and the spacer, including the coupling volume, is filled with a sealant material (19), embedding the extended portion.

It has been surprisingly found that locating the free end (12) of the extending portion (11) of the flexible circuit board (10) within the coupling volume, gives additional space to design a more robust and therefore more reliable electric connection. In a preferred embodiment, this additional space allows indeed the use of a second circuit board and a connector, preferably a Zero Insertion Force (ZIF) connector and even preferred a robust but bulkier ZIF connector. The use of a robust ZIF connector improves even further the mechanical coupling, the retention force between the flexible circuit board and the second circuit board. It has been surprisingly found that the strength of the connection will resist through all manufacturing steps, maintaining excellent electric connection, providing efficiently and reliability. This additional space provides further for more room to actually make the connection during manufacturing.

By robust ZIF connector, it is meant a ZIF connector with a retention force ≥ 7N, preferably with a retention force ≥ 9N, more preferably a connector with a retention force ≥10N. Such increased retention force can be brought by the addition of mechanical blocking sides notches. Other means to increase the retention of ZIF connectors is to increase the mechanic coupling surface. Usual robust ZIF connectors will present a coupling width of ≥3mm. Suitable robust ZIF connectors are sold by Hirose under the references FH33-45S-0.5SH and FH40-45S-0.5SV or by Molex under the references 51296-4533 and 505110-4591.

The second circuit board (16) can be maintained in the coupling volume V by any fixing means such as gluing, preferably with a sealant material, more preferably the same sealant material that will be used for the secondary seal, snap-fitting, and/or by being embedded in a sealant material.

The cable harness connects the flexible circuit boards of the IGU of the present invention to one or more controller assemblies, drivers and/or power supplies to control and provide power to the electronic devices.

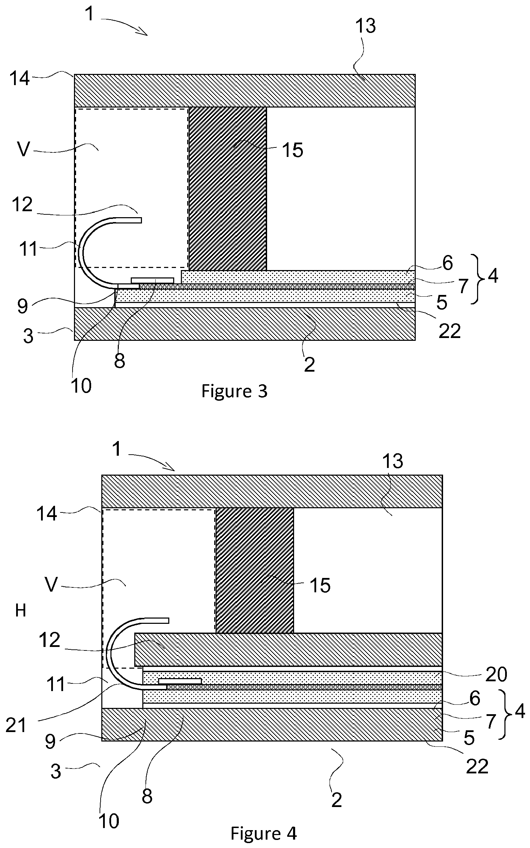

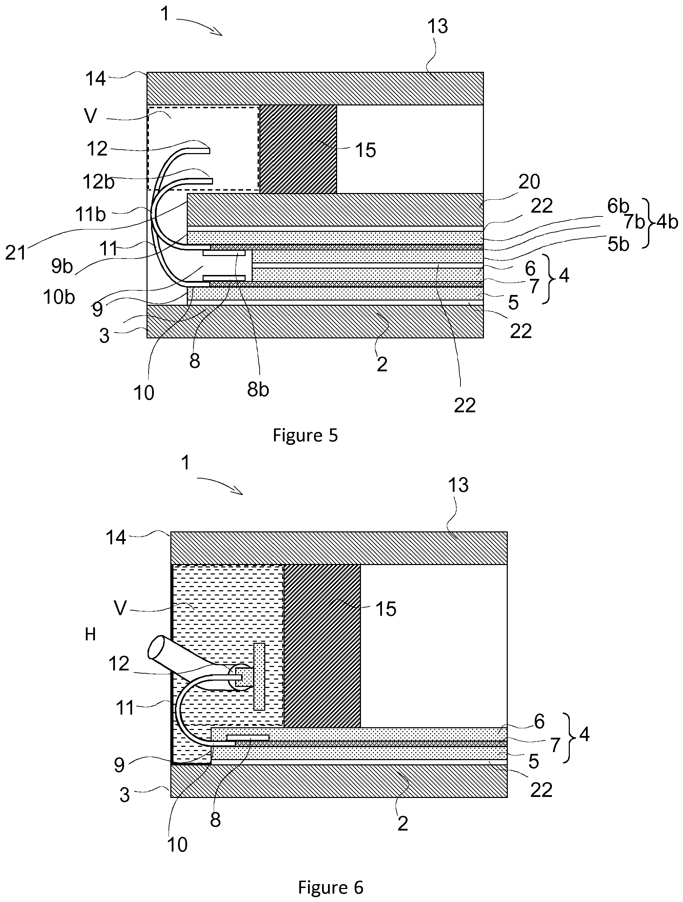

In a preferred embodiment of the present invention as shown in **Figure 3** and in **Figure 5****,** the laminate edge (9) is step-shaped, at least a portion of the second substrate (6) being recessed relative to at least a portion of the first substrate (5), exposing at least a portion of the terminals (8) for electric connection. There are multiple embodiments for how the substrate (6) is offset from the other substrate (5) (and equivalently, vice versa). The two substrates (5,6) could be laterally displaced, one relative to the other, and then assembled together as a lamination. The second substrate could be laser cut or otherwise cut before or after assembly to the first substrate. The two substrates could be cut to differing dimensions, e.g., the second substrate shorter than the first substrate. The offset creates an overhang or shelf, with one edge of the second substrate recessed from one edge of the first substrate and terminals that are exposed, i.e., not covered or otherwise obscured by the second substrate. The overhang or shelf could include an entire edge of the electronic device, or a portion of an edge, one or two corners (and a portion or entirety of an edge), or more than one edge, etc. It has been found that such recess allows the flexible circuit board (4) to better to connect to the exposed terminals (8).

The electronic laminate can be further attached or laminated to additional pieces of glass or plastic to be incorporated into different types of products. For example, a electronic laminate fabricated on a single sheet of glass, which is not heat strengthened or tempered, can be laminated to a second piece of tempered glass. This increases the strength of the IGU to tolerate the required stresses experienced in operation. By way of further example, an electronic laminate with electronic device disposed between two pieces of glass, which are not heat strengthened or tempered, can be laminated to a third piece of tempered glass, and that three piece of glass assembly can be then attached to a pane to form further an IGU.

As shown in **Figure 4** as a preferred embodiment of the present invention, the IGU further comprises a third pane (20), preferably a glass sheet, located between the second substrate (6) of the electronic laminate (4) and the spacer (15). This third pane is preferably attached with thermoplastic interlayer (22), preferably a polyvinyl butyral layer. The edge (21) of such third pane is recessed with respect to the first pane edge. In a preferred embodiment, the third pane edge (21) is aligned with the laminate edge (9), preferably has same length than the second substrate (6) of the electronic laminate (4).

In a further embodiment, one or more electronic laminates can be laminated together, and laminated to one or more pieces of pane, preferably glass sheets. The first pane (2) may be laminated to a first electronic laminate (7), and the second pane (13) may be laminated to a second electronic laminate (7). In another embodiment, a first and a second electronic laminate may be laminated to one another to form a multi-pane electronic stack and then laminated to either the first pane (2) or the second pane (13). In this dual pane embodiment, the two electronic laminates may alternatively be laminated between two carrier glass substrates where one of the two carrier glass substrates may be the first pane (2) or the second pane (13). In case of electrochromic laminates, this arrangement allows lower light transmission in the fully darkened state, i.e., when both electrochromic devices are darkened.

As illustrated in figure 5, the first electronic laminate (4) comprises a first substrate (5), a second substrate (6), an electronic device (7) provided between the first and second substrate, a plurality of terminals (8) coupled to the electronic device, a laminate edge (9) recessed with respect to the first pane edge. The first substrate of the electronic laminate is attached to the first pane. Similarly, the second electronic laminate (4b) comprises as well a first substrate (5b), a second substrate (6b), an electronic device (7b) provided between the first and second substrate, a plurality of terminals (8b) coupled to the electronic device, a laminate edge (9b) recessed with respect to the first pane edge. The first substrate (5b) of the second electronic laminate (4b) is attached to the second substrate (6) of the first electronic laminate (4).

In a preferred embodiment, the material of the first substrate (5) of the first electronic laminate (4) is the same material than the second substrate (6b) of the second electronic laminate (4b). In a preferred embodiment, the material of the second substrate (6) of the first electronic laminate (4) is the same material than the first substrate (5b) of the second electronic laminate (4b). This symmetric laminated assembly can be advantageous to reduce or eliminate bowing during lamination. Not to be limited by theory, bowing may occur when there are materials with different coefficients of thermal expansion in an asymmetric assembly such that the expansion and contraction of one side of the assembly is different from the opposing side of the assembly leading to residual stress and bowing.

In the embodiments wherein more than one electronic laminates in used, there will be a corresponding number of flexible circuit board. The extended portion of both flexible circuit boards is flush with or recessed from the second pane edge. The free end of the extended portion of both flexible circuit boards is located within the coupling volume. In preferred embodiments, there will be a corresponding number of second circuit boards and cable harness. In this instance, such IGU will comprises two cable harnesses, one of which is electrically connected to the flexible circuit board on the first electronic device, and the other of which is electrically connected to the flexible circuit board on the second electronic device

In a further embodiment, the electronic laminates could be further laminated to a third pane, as described above.

According to **Figure 5****,** the IGU comprises a first pane (2), preferably glass sheet, attached to the first substrate (5) of the electronic laminate (4) by a layer of PVB (22). The first electronic laminate (4) is attached to the first substrate (5b) of the second electronic laminate (4b) by a layer of PVB (b). In this pictured embodiment, the second electronic laminate (4b) can be further attached to a third pane (20), preferably a glass sheet, by a layer of PVB (22). The IGU further comprises a second pane (13), preferably a glass sheet, attached to a spacer (15) maintaining a distance between the second pane (13) and the second substrate (6b) of the second electronic laminate (4b). In the illustrated embodiment, the IGU further comprises a glass sheet as the third pane (20) located between the second substrate (6b) of the second electronic laminate (4b) and the spacer (15). This third pane is preferably attached with thermoplastic interlayer (22), preferably a polyvinyl butyral layer. The edge (21) of such third pane is recessed with respect to the first pane edge (3). As depicted in **figure 5****,** the third pane edge (21) has same length than the second substrate (6) of the electronic laminate (4).The spacer (15) is recessed with respect to the laminate edge and the second pane edge. The IGU further comprises a silicone secondary sealant (19).

The flexible circuit boards (10 and 10b) are used to make connection to the first and second bus bars (Terminal 8 and terminal 8b) of each electronic laminate. Each electronic laminate has a separate flexible circuit board. The extended portion (11, 11b) of both flexible circuit boards (10, 10b) is flush with or recessed from the second pane edge (14). The free end (12, 12b) of the extended portion of both flexible circuit boards is located within the coupling volume (V).

As illustrated in **figure 5****,** the laminate edge (9) of the first electronic laminate (4) is step-shaped in that at least a portion of the second substrate (6) being recessed relative to at least a portion of the first substrate (5), exposing at least a portion of the terminals (8) for electric connection. Similarly, the laminate edge (9b) of the second electronic laminate (4b) is step-shaped in that at least a portion of the first substrate (5b) being recessed relative to at least a portion of the second substrate (6b), exposing at least a portion of the terminals (8) for electric connection.

The present invention further relates to a method of producing an integrated glazing unit (IGU) to the present invention. Such method comprises laminating the electronic device (7) to the first substrate (5) and second substrate (6); attaching the electronic laminate (4) to the first pane (2); attaching the second pane (13), to the spacer (15) for maintaining a distance between the second pane (13) and the second substrate (6); connecting the flexible circuit board (10) to at least a portion of the terminals (8) of the electronic laminate (4), with a extended portion protruding out of the laminate edge (9); and positioning the free end (12) within the coupling volume (V) such that the extended portion (11) of the circuit board (10) is flush with or recessed from the second pane edge (14).

In one embodiment, the method further comprises fixing the extended portion (11) of the flexible circuit board (10) in said coupling volume by embedding in some sealing material and/or snap-fitting.

In a preferred embodiment, such method further comprises connecting the free end (12) to the cable harness (17) through a second circuit board (16), preferably a rigid circuit board supporting a ZIF connector (18); more preferably a robust ZIF connector.
In a preferred embodiment, such method further comprises filling the volume comprised between the first pane, the second pane, and the spacer with a sealing material.

## Claims

1. An integrated glazing unit (IGU) (1), comprising:
(a) a first pane (2) comprising a first pane edge (3);
(b) an electronic laminate (4) comprising:
- a first substrate (5),
- a second substrate (6),
- an electronic device (7) provided between the first and second substrate,
- a plurality of terminals (8) coupled to the electronic device,
- a laminate edge (9) recessed with respect to the first pane edge; and
wherein the first substrate is attached to the first pane;
(c) a flexible circuit board (10) electrically coupled to at least a portion of the plurality of terminals and comprising an extended portion (11) protruding out of the laminate edge and comprising a free end (12);
(d) a second pane (13) comprising a second pane edge (14) and attached to a spacer (15) of height H measured normal to the second pane, maintaining a distance between the second pane and the second substrate, said spacer being recessed with respect to the laminate edge and the second pane edge;
**Characterized in that** the extended portion of the flexible circuit board is flush with or recessed from the second pane edge, and
**in that,** the free end is located within a coupling volume (V) having a rectangular cross-section normal to the second pane edge and a height (H) and being defined by the second pane and the spacer.

2. The integrated glazing unit according to claim 1 wherein the free end is connected to a cable harness (17) through a second circuit board (16), preferably a rigid circuit board supporting a Zero Insertion Force connector (18), more preferably a rigid circuit board supporting a robust Zero Insertion Force connector.

3. The integrated glazing unit according to claim 2 wherein a volume defined by the first pane, the second pane, and the spacer, including the coupling volume, is filled with a sealant material (19), embedding the extended portion.

4. The integrated glazing unit according to any one of the preceding claims wherein the electronic laminate further comprises:
- a first transparent conductive layer on the first substrate;
- a first bus bar applied to the first substrate and the first transparent conductive layer;
- an active electronic material layer;
- a second transparent conductive layer on the second substrate;
- a second bus bar applied to the second substrate and the second transparent conductive layer.

5. The integrated glazing unit according to any one of the preceding claims wherein the laminate edge is step-shaped, at least a portion of the second substrate being recessed relative to at least a portion of the first substrate, exposing at least a portion of the terminals for electric connection.

6. The integrated glazing unit according to any one of the preceding claims wherein the electronic device is selected from the group consisting of electrochromic device, Suspended Particles Devices, Liquid Crystal Displays, photovoltaic cells, and/or display.

7. The integrated glazing unit according to claim 5, wherein the electronic device comprises at least an electrochromic device, preferably at least 2 electrochromic devices.

8. The integrated glazing unit according to any one of the preceding claims wherein the first pane, and second pane are glass sheets.

9. The integrated glazing unit according to anyone of the preceding claims wherein the first substrate (5) and second substrate (6) are glass sheets.

10. The integrated glazing unit according to any one of the preceding claims further comprising a third pane (20), located between the second substrate and the spacer, said third pane comprising a third pane edge (21) recessed with respect to the first pane edge and wherein said third pane is preferably a glass sheet.

11. The integrated glazing unit according to claim 10 wherein the third pane has the same length than the second substrate.

12. A method of producing an integrated glazing unit (IGU) according to anyone of the preceding claims, comprising:
- laminating the electronic device (7) to the first substrate (5) and second substrate (6);
- attaching the electronic laminate (4) to the first pane (2);
- attaching the second pane (13), to the spacer (15) for maintaining a distance between the second pane (13) and the second substrate (6);
- connecting the flexible circuit board (10) to at least a portion of the terminals (8) of the electronic laminate (4), with a extended portion protruding out of the laminate edge (9); and
- positioning the free end (12) within the coupling volume (V) such that the extended portion (11) of the circuit board (10) is flush with or recessed from the second pane edge (14).

13. A method according to claim 12 further comprising connecting the free end to the cable harness (17) through a second circuit board (16), preferably a rigid circuit board supporting a ZIF connector (18), more preferably a rigid circuit board supporting a robust Zero Insertion Force connector.

14. A method according to any one of the claim 13 further comprising filling the volume comprised between the first pane, the second pane, and the spacer with a sealing material.
